(19) Europäisches Patentamt
European Patent Office
Office européen des brevets

(11) EP 2 314 741 B1

(12) **EUROPEAN PATENT SPECIFICATION**

(45) Date of publication and mention of the grant of the patent:
**17.07.2013 Bulletin 2013/29**

(21) Application number: **09806681.4**

(22) Date of filing: **07.08.2009**

(51) Int Cl.:
***D01F 6/06*** *(2006.01)* ***C08F 10/06*** *(2006.01)*
***D01F 6/46*** *(2006.01)* ***D01F 8/06*** *(2006.01)*

(86) International application number:
**PCT/JP2009/064001**

(87) International publication number:
**WO 2010/018789 (18.02.2010 Gazette 2010/07)**

(54) **METHOD FOR PRODUCING POLYPROPYLENE ELASTIC FIBER AND POLYPROPYLENE ELASTIC FIBER**

VERFAHREN ZUR HERSTELLUNG EINER ELASTISCHEN POLYPROPYLENFASER UND ELASTISCHE POLYPROPYLENFASER

PROCÉDÉ DE FABRICATION D'UNE FIBRE ÉLASTIQUE EN POLYPROPYLÈNE ET FIBRE ÉLASTIQUE EN POLYPROPYLÈNE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.08.2008 JP 2008208124**

(43) Date of publication of application:
**27.04.2011 Bulletin 2011/17**

(73) Proprietor: **Idemitsu Kosan Co., Ltd.**
**Chiyoda-ku**
**Tokyo 100-8321 (JP)**

(72) Inventors:
- **TAKEBE, Tomoaki**
**Ichihara-shi**
**Chiba 299-0193 (JP)**
- **MINAMI, Yutaka**
**Ichihara-shi**
**Chiba 299-0193 (JP)**
- **KANAI, Toshitaka**
**Ichihara-shi**
**Chiba 299-0193 (JP)**

(74) Representative: **Vossius & Partner**
**Siebertstrasse 4**
**81675 München (DE)**

(56) References cited:
**EP-A1- 2 161 360**
**WO-A1-2006/051708**
**WO-A1-2009/001871**
**JP-A- 2001 172 325**
**JP-A- 2003 027 331**
**JP-T- 2003 511 578**
**JP-T- 2008 519 180**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a method of producing a polypropylene elastic fiber and a polypropylene-based elastic fiber, and more specifically, to a method of stably producing a polypropylene elastic fiber which is excellent in elastic recovery, has high strength, is free of tack, shows good texture, and is preferably used particularly in a sanitary material such as a paper diaper, and a polypropylene-based elastic fiber which has a core-sheath bicomponent structure obtained by using a specific polypropylene.

Rubber elasticity may be requested of, for example, automobile parts, industrial machine parts, and electrical and electronic parts, and vulcanized rubber, a vinyl chloride resin, a thermoplastic elastomer, a polyurethane elastic fiber, and the like have been conventionally used. However, each of such materials involves problems in terms of, for example, various physical properties and economical efficiency, and hence the development of a new material has been demanded.

In addition, a technology involving the use of a polyolefin as a fiber material has been known in recent years. For example, Patent Literature 1 discloses a polyolefin monofilament obtained by using a polyolefin resin whose melt flow rate has a specific value. However, the technology disclosed in Patent Literature 1 does not relate to an elastic fiber. Patent Literature 2 discloses a fiber and the like each using a thermoplastic resin composition containing a specific polyolefin, and describes that the fiber and the like are excellent in flexibility and rubber elasticity. In the technology described in Patent Literature 2, however, a styrene-based elastomer and a softening agent are needed for imparting the flexibility and the rubber elasticity, and hence a thermoplastic resin composition having complex composition is needed.

EP 2 161 360 discloses an elastic nonwoven fabric and a fiber product using the elastic nonwoven fabric and an elastic nonwoven fabric containing core/shell type composite fibers.

As described above, in today's circumstances, an additional technological development is needed for the production of an elastic fiber with a polyolefin.

Patent Literature

[PTL 1] JP 2002-88568 A
[PTL 2] JP 2006-176600 A

The present invention has been made in view of the above-mentioned circumstances, and an object of the present invention is to provide a method of producing a polypropylene elastic fiber which is excellent in elastic recovery, has high strength, is free of tack, and shows good texture, and a polypropylene-based elastic fiber which has excellent elastic recovery.

The inventors of the present invention have made extensive studies, and as a result, have found that a target elastic fiber is obtained by using a specific low-crystalline polypropylene as a raw material. Further, the inventors have found that a problem in terms of, for example, productivity, which may have stemmed from the characteristics of the above-mentioned raw material, is resolved by a step of subjecting the raw material to melt extrusion at a specific temperature and a step of cooling the raw material in a water bath at a specific temperature. A method of producing a polypropylene elastic fiber according to a first invention of the present application has been completed on the basis of such findings. In addition, the inventors have found that a fiber having a core-sheath structure using the low-crystalline polypropylene as a core component also has excellent elastic recovery. The present application discloses a polypropylene-based elastic fiber which has been completed on the basis of such finding.

That is, the present invention provides the following:

(1) a method of producing an elastic fiber, including the steps of:

subjecting a raw material to melt extrusion with a spinning nozzle at 100 to 300°C;
cooling the fiber after the melt extrusion in a water bath at 0 to 50°C; and
winding the cooled fiber,
in which a low-crystalline polypropylene satisfying the following characteristics (a) to (g) or a crystalline resin composition containing the low-crystalline polypropylene, the low-crystalline polypropylene or the crystalline resin composition satisfying the following characteristics (A) and (B), is used as the raw material:

(a) [mmmm]=20 to 60 mol%;
(b) [mm]=50 to 90 mol%;

(c) [rrrr] / (1-[mmmm]) ≤0.1;
(d) [rmrm]>2.5 mol%;
(e) [mm] × [rr] / $[mr]^2$ ≤2.0;
) weight-average molecular weight (Mw)=10,000 to 200,000;
(g) molecular weight distribution (Mw/Mn)<4;

(A) a crystallization temperature (Tc), which is measured with a differential scanning calorimeter (DSC), is 20 to 100°C; and
(B) a melting point (Tm-D), which is defined as the peak top of the peak observed at the highest temperature of a melting endothermic curve obtained with a differential scanning calorimeter (DSC) by retaining the raw material under a nitrogen atmosphere at -10°C for 5 minutes and then increasing the temperature at 10°C/min, is 0 to 120°C;

(2) the method of producing an elastic fiber according to the above-mentioned item 1, in which the crystalline resin composition contains a crystal nucleating agent;
(3) the method of producing an elastic fiber according to the above-mentioned item 1 or 2, further including, after the step of winding the cooled fiber, a step of stretching the fiber so that the fiber has a length equal to or more than 200% of the initial length of the fiber.
Furthermore, the present application discloses
(4) a core-sheath bicomponent elastic fiber, which is obtained by using a low-crystalline polypropylene satisfying the following characteristics (a) to (g) or a crystalline resin composition containing the low-crystalline polypropylene, the low-crystalline polypropylene or the crystalline resin composition satisfying the following characteristics (A) and (B), at least as a core component, in which the fiber has a total low-crystalline polypropylene fraction, which is calculated from the following equation (I), of 80 to 99 mass%:

(a) [mmmm]=20 to 60 mol%;
(b) [mm]=50 to 90 mol%;
(c) [rrrr]/ (1-[mmmm]) ≤0.1;
(d) [rmrm]>2.5 mol%;
(e) [mm] × [rr] / $[mr]^2$≤2.0;
(f) weight-average molecular weight (Mw)=10,000 to 200,000;
(g) molecular weight distribution (Mw/Mn)<4;

(A) a crystallization temperature (Tc), which is measured with a differential scanning calorimeter (DSC), is 20 to 100°C; and
(B) a melting point (Tm-D), which is defined as the peak top of the peak observed at the highest temperature of a melting endothermic curve obtained with a differential scanning calorimeter (DSC) by retaining the raw material under a nitrogen atmosphere at -10°C for 5 minutes and then increasing the temperature at 10°C/min, is 0 to 120°C,
[Math. 1]

$$\text{Total low-crystalline polypropylene fraction} = (Ws \times Xs + Wc \times Xc)/100 \quad (I)$$

where Ws represents the mass fraction of a sheath component, Wc represents the mass fraction of the core component, Xs represents a mass fraction of the low-crystalline polypropylene in the sheath component, and Xc represents the mass fraction of the low-crystalline polypropylene in the core component; and

(5) the core-sheath bicomponent elastic fiber according to the above-mentioned item 4, in which the Ws is equal to or smaller than the Wc.

According to the present invention, there are provided the method of stably producing a polypropylene elastic fiber which is excellent in elastic recovery, has high strength, is free of tack, and shows good texture, and the polypropylene-based elastic fiber which has excellent elastic recovery.
A specific low-crystalline polypropylene is used as a raw material in the method of producing an elastic fiber according to the first invention of the present application. It should be noted that the term "low-crystalline polypropylene"

as used herein refers to a polypropylene whose stereoregularity is moderately disturbed, and specifically, to a polypropylene satisfying the following characteristic (a). The low-crystalline polypropylene used in the present invention is a propylene-based polymer satisfying the following characteristics (a) to (g).

(a) [mmmm]=20 to 60 mol%

The above-mentioned low-crystalline polypropylene has a meso pentad fraction [mmmm] of 20 to 60 mol%. When the meso pentad fraction is smaller than 20 mol%, solidification after melting is so slow that the fiber adheres to a winding roll to make continuous molding difficult. In addition, when the meso pentad fraction is larger than 60 mol%, a degree of crystallinity is so high that elastic recovery reduces. From such viewpoints, the meso pentad fraction [mmmm] is preferably 30 to 50 mol%, more preferably 40 to 50 mol%.

(b) [mm]=50 to 90 mol%

The above-mentioned low-crystalline polypropylene has a stereoregularity index [mm] of 50 to 90 mol%. When the [mm] is smaller than 50 mol%, tack is apt to occur. When the [mm] is larger than 90 mol%, operability in production steps reduces. From such viewpoints, the [mm] is preferably 60 to 90 mol%, more preferably 60 to 80 mol%.

(c) [rrrr] / (1 - [mmmm]) $\leq$0.1

The above-mentioned low-crystalline polypropylene has a ratio [rrrr] / (1-[mmmm]) of 0.1 or less. The ratio [rrrr] /(1-[mmmm]) is an indicator for the uniformity of the regularity distribution of the low-crystalline polypropylene. When the value becomes large, a mixture of a high-regularity polypropylene and an atactic polypropylene is obtained as in the case of a conventional polypropylene produced by using an existing catalyst system, and the mixture causes tack. From such viewpoint, the ratio [rrrr] / (1- [mmmm] ) is preferably 0.05 or less, more preferably 0. 04 or less.

(d) [rmrm]>2.5 mol%

The above-mentioned low-crystalline polypropylene has a racemic-meso-racemic-meso fraction [rmrm] in excess of 2.5 mol%. When the [rmrm] is 2.5 mol% or less, the randomness of the low-crystalline polypropylene reduces, the degree of crystallinity increases owing to crystallization by an isotactic polypropylene block chain, and the elastic recovery reduces. The [rmrm] is preferably 2.6 mol% or more, more preferably 2.7 mol% or more. An upper limit for the [rmrm] is typically about 10 mol%.

(e) [mm] $\times$ [rr] / [mr]$^2$$\leq$2.0

The above-mentioned low-crystalline polypropylene has a [mm] $\times$ [rr] / [mr]$^2$ of 2. 0 or less. The [mm] $\times$ [rr] / [mr]$^2$ is an indicator for the randomness of the polymer, and the polymer has higher randomness and is more excellent in elastic recovery as the value reduces. When the value is 2.0 or less, sufficient elastic recovery is obtained and tack is suppressed in a fiber obtained by spinning.
The [mm] $\times$ [rr] / [mx] $^2$ is preferably more than 0. 25 and 1.8 or less, more preferably 0.5 to 1.5 from such a viewpoint that the above-mentioned sufficient elastic recovery is obtained.
It should be noted that the above-mentioned characteristics (a) to (e) were measured in conformity with methods proposed by A. Zambelli, et al. ("Macromolecules, 6, 925 (1973)" and "Macromolecules, 8, 687 (1975)") from the signal of a methyl group in a $^{13}$C-NMR spectrum.
Measurement conditions of the $^{13}$C-NMR spectrum are as described below.

Apparatus: JNM-EX 400 Model $^{13}$C-NMR apparatus, manufactured by JEOL Ltd.
Method: proton complete decoupling method
Concentration: 220 mg/milliliter
Solvent: 90:10 (volume ratio) mixed solvent of 1,2,4-trichlorobenzene and benzene-$d_6$
Temperature: 130°C
Pulse width: 45°
Pulse repetition period: 4 seconds
Integration: 10,000 times

(f) Weight-average molecular weight (Mw)=10,000 to 200,000

The above-mentioned low-crystalline polypropylene has a weight-average molecular weight of 10,000 to 200,000. When the weight-average molecular weight is 10,000 or more, the viscosity of the low-crystalline polypropylene is not excessively low but moderate, and hence end breakage upon spinning is suppressed. In addition, when the weight-average molecular weight is 200,000 or less, the viscosity of the above-mentioned low-crystalline polypropylene is not excessively high and spinnability is improved. The weight-average molecular weight is preferably 30,000 to 150, 000, more preferably 50,000 to 150,000.

(g) Molecular weight distribution (Mw/Mn)<4

The above-mentioned low-crystalline polypropylene has a molecular weight distribution of less than 4. When the molecular weight distribution (Mw/Mn) is less than 4, the occurrence of tack in a fiber obtained by spinning is suppressed. The molecular weight distribution is preferably 3 or less.

It should be noted that the characteristics (f) and (g) are determined by gel permeation chromatography (GPC). Apparatuses and measurement conditions adopted in the present invention are as described below.

GPC measuring apparatus column: TOSO GMHHR-H (S) HT
Detector: RI detector WATERS 150C for liquid chromatogram Measurement conditions
Solvent: 1,2,4-trichlorobenzene
Measuring temperature: 145°C
Flow rate: 1.0 milliliter/minute
Sample concentration: 2.2 mg/milliliter
Injected amount: 160 micro liters
Calibration curve: Universal Calibration
Analytical program: HT-GPC (Ver. 1.0)

As long as the above-mentioned characteristics (a) to (g) are satisfied, the above-mentioned low-crystalline polypropylene may be a copolymer using a comonomer except propylene to such an extent that the object of the present invention is not impaired. In this case, the content of the comonomer is typically 2 mass% or less. Examples of the comonomer include ethylene, 1-butene, 1-pentene, 4-methyl-1-pentene, 1-hexene, 1-octene, 1-decene, 1-dodecene, 1-tetradecene, 1-hexadecene, 1-octadecene, and 1-eicosene. In the present invention, one kind or two or more kinds thereof can be used.

A preferred method of producing the above-mentioned low-crystalline polypropylene involves polymerizing or copolymerizing propylene and the like with a metallocene catalyst obtained by combining (A) a transition metal compound in which crosslinked structures are formed through two crosslinking groups and (B) a co-catalyst. A specific example of the production method is a method involving polymerizing or copolymerizing propylene in the presence of a catalyst for polymerization containing the transition metal compound (A) represented by the general formula (I) and the co-catalyst component (B) selected from a compound (B-1) and an aluminoxane (B-2) each capable of reacting with the transition metal compound as the component (A) or a derivative of the compound to form an ionic complex.

[Chem. 1]

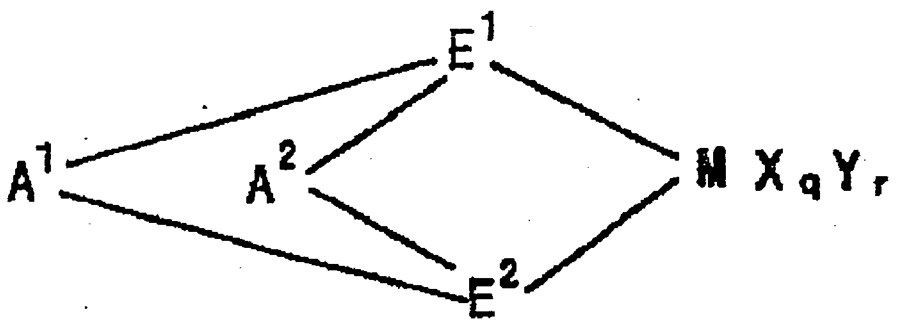

· · · (I)

[In the formula:

M represents a metal element belonging to any one of Groups 3 to 10 or a lanthanoid series in the periodic table;
$E^1$ and $E^2$ each represent a ligand selected from a substituted cyclopentadienyl group, an indenyl group, a substituted

indenyl group, a heterocyclopentadienyl group, a substituted heterocyclopentadienyl group, an amide group, a phosphide group, a hydrocarbon group, and a silicon-containing group, form crosslinked structures through $A^1$ and $A^2$, and may be identical to or different from each other;
X represents a σ-bonding ligand, and when a plurality of X's are present, the plurality of X's may be identical to or different from each other, and each X may crosslink with any other X, $E^1$, $E^2$, or Y;
Y represents a Lewis base, and when a plurality of Y's are present, the plurality of Y's may be identical to or different from each other, and each Y may crosslink with any other Y, $E^1$, $E^2$, or X;
$A^1$ and $A^2$ each represent a divalent crosslinking group that bonds two ligands, each represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or $-AlR^1-$ where $R^1$ represents a hydrogen atom, a halogen atom, a hydrocarbon group having 1 to 20 carbon atoms, or a halogen-containing hydrocarbon group having 1 to 20 carbon atoms, and may be identical to or different from each other;
q represents an integer of 1 to 5 corresponding to [(valence of M)-2]; and
r represents an integer of 0 to 3.]

Specific examples of the transition metal compound represented by the general formula (I) include (1,2'-dimethylsilylene)(2,1'-dimethylsilylene)bis(3-n-butylind enyl) zirconium dichloride, (1,2'-dimethylsilylene)(2,1'-dimethylsilylene) bis(3-trimethyls ilylmethylindenyl)zirconium dichloride, (1,2'-dimethylsilylene)(2,1'-dimethylsilylene)bis(3-phenylinde nyl)zirconium dichloride, (1,2'-dimethylsilylene)(2,1'-dimethylsilylene)bis(4,5-benzoind enyl)zirconium dichloride, (1,2'-dimethylsilylene)(2,1'-dimethylsilylene)bis(4-isopropyli ndenyl)zirconium dichloride, (1,2'-dimethylsilylene)(2,1'-dimethylsilylene)bis(5,6-dimethyl indenyl)zirconium dichloride, (1,2'-dimethylsilylene)(2,1'-dimethylsilylene)bis(4,7-di-isopr opylindenyl)zirconium dichloride, (1,2''-dimethylsilylene)(2,1'-dimethylsilylene)bis(4-phenylinde nyl)zirconium dichloride, (1,2'-dimethylsilylene)(2,1'-dimethylsilylene)bis(3-methyl-4-i sopropylindenyl)zirconium dichloride, (1,2'-dimethylsilylene)(2,1'-dimethylsilylene)bis(5,6-benzoind enyl) zirconium dichloride, (1,2'-dimethylsilylene)(2,1'-isopropylidene)-bis (indenyl)zirco nium dichloride, (1,2'-dimethylsilylene)(2,1'-isopropylidene)-bis(3-methylinden yl)zirconium dichloride, (1,2'-dimethylsilylene)(2,1'-isopropylidene)-bis(3-isopropylin denyl)zirconium dichloride, (1,2'-dimethylsilylene)(2,1'-isopropylidene)-bis(3-n-butylinde nyl)zirconium dichloride, and (1,2'-dimethylsilylene)(2,1'-isopropylidene)-bis(3-trimethylsi lylmethylindenyl)zirconium dichloride, and compounds obtained by substituting zirconium with titanium or hafnium in those compounds.

Next, examples of the component (B-1) of the component (B) include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, and benzyl(tri-n-butyl)ammonium tetraphenylborate.

One kind of the components (B-1) may be used, or two ormore kinds thereof may be used in combination. Meanwhile, examples of the aluminoxane as the component (B-2) include methylaluminoxane, ethylaluminoxane, and isobutylaluminoxane. One kind of those aluminoxanes may be used, or two or more kinds thereof may be used in combination. In addition, one or more kinds of the components (B-1) and one or more kinds of the components (B-2) may be used in combination.

The above-mentioned catalyst for polymerization can use an organic aluminum compound as a component (C) in addition to the above-mentioned components (A) and (B). Here, examples of the organic aluminum compounds as the component (C) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, and ethylaluminum sesquichloride. One kind of those organic aluminum compounds may be used, or two or more kinds thereof may be used in combination. Here, upon polymerization of propylene, at least one kind of the catalyst components can be used while being carried by a proper carrier.

A method for the polymerization is not particularly limited, and any one of the methods such as a slurry polymerization method, a vapor phase polymerization method, a bulk polymerization method, a solution polymerization method, and a suspension polymerization method may be employed. Of those, a bulk polymerization method and a solution polymerization method are particularly preferred. A polymerization temperature is typically -100 to 250°C, and with regard to a usage ratio of the catalyst to the reaction raw material, a molar ratio of the raw material monomer to the above-mentioned component (A) is preferably 1 to 108 and particularly preferably 100 to 105. Further, a polymerization time is typically 5 minutes to 10 hours, and a reaction pressure is typically normal pressure to 20 MPa (gauge).

In the method of producing an elastic fiber according to the first invention of the present application, the above-mentioned low-crystalline polypropylene or a crystalline resin composition containing the low-crystalline polypropylene is used as a raw material. The crystalline resin composition is a crystalline resin composition containing any other thermoplastic resin and an additive as well as the low-crystalline polypropylene.

The raw material used in the first invention of the present application satisfies the following characteristics (A)

and (B).

(A) A crystallization temperature (Tc), which is measured with a differential scanning calorimeter (DSC), is 20 to 100°C.

The crystallization temperature (Tc) is preferably 20 to 90°C. Here, the Tc is an indicator for the crystallization rate of the raw material. As the Tc becomes higher, the crystallization rate becomes larger. When the Tc is 20°C or more, the crystallization rate is not excessively small but moderate. In addition, a yarn immediately after spinning sufficiently solidifies, and hence neither adhesion nor shrinkage occurs. As a result, a uniform yarn or nonwoven fabric can be obtained. On the other hand, when the Tc is 100°C or less, the crystallization rate is suppressed, and the degree of crystallinity is suppressed in association with the suppression. As a result, the elastic recovery of a fiber obtained by the spinning is improved.
It should be noted that the above-mentioned Tc is determined as the peak top of the peak of an exothermic curve obtained with a differential scanning calorimeter (DSC-7 manufactured by PerkinElmer, Inc.) by retaining 10 mg of a sample under a nitrogen atmosphere at 220°C for 5 minutes and then decreasing the temperature at 20°C/min to -30°C.
(B) A melting point (Tm-D), which is defined as the peak top of the peak observed at the highest temperature of a melting endothermic curve obtained with a differential scanning calorimeter (DSC) by retaining the raw material under a nitrogen atmosphere at-10°C for 5 minutes and then increasing the temperature at 10°C/min, is 0 to 120°C.
When the melting point (Tm-D) is 0°C or more, the occurrence of tack in the fiber obtained by the spinning is suppressed. When the melting point is 120°C or less, sufficient elastic recovery is obtained. From such viewpoints, the melting point (Tm-D) is preferably 0 to 100°C.
It should be noted that the above-mentioned melting point (Tm-D) is determined as the peak top of the peak observed at the highest temperature of a melting endothermic curve obtained with a differential scanning calorimeter (DSC-7 manufactured by PerkinElmer, Inc.) by retaining 10 mg of a sample under a nitrogen atmosphere at -10°C for 5 minutes and then increasing the temperature at 10°C/min.
In addition, the raw material used in the first invention of the present application has an MFR of preferably 0.1 to 15 g/10 minutes, more preferably 0.5 to 15 g/10 minutes. When the MFR is 15 g/10 minutes or less, the moldability of a melt-extruded filament is stabilized. When the MFR is 0.1 g/10 minutes or more, inconvenience in spinning discharge can be avoided. Here, the term "MFR" as used in the present invention refers to a value defined by JIS-K7210, and the MFR of the low-crystalline polypropylene is measured in accordance with JIS-K6758.
Examples of the other thermoplastic resin and the additive in the above-mentioned crystalline resin composition include those described below.
The thermoplastic resin is not particularly limited as long as the crystalline resin composition satisfies the above-mentioned characteristics (A) and (B), however, an olefin-based polymer is preferred. Examples of the olefin-based polymer include a polypropylene, a propylene-ethylene copolymer, a propylene-ethylene-diene copolymer, a polyethylene, an ethylene/$\alpha$-olefin copolymer, an ethylene-vinyl acetate copolymer, and a hydrogenated styrene-based elastomer. One kind of those olefin-based polymers may be used alone, or two or more kinds thereof may be used in combination.
As the additive, any conventionally known additives may be blended. Examples of the additives include a foaming agent, a crystal nucleating agent, a weatherability stabilizer, a UV absorber, a light stabilizer, a heat resistance stabilizer, an antistatic agent, a mold releasing agent, a flame retardant, a synthetic oil, a wax, an electric property-improving agent, a slip inhibitor, an anti-blocking agent, a viscosity-controlling agent, a coloring inhibitor, a defogging agent, a lubricant, a pigment, a dye, a plasticizer, a softening agent, an age resistor, a hydrochloric acid-absorbing agent, a chlorine scavenger, an antioxidant, and an antitack agent. In particular, in the present invention, pigments, antioxidants, and crystal nucleating agents are preferably blended.
As the pigment, one or more kinds of organic pigments or inorganic pigments may be used. Examples of the organic pigments include azo-based pigments such as azolake, hansa, benzimidazolone, diallylide, pyrazolone, yellow, and red; polycyclic pigments such as phthalocyanine, quinacridone, perylene, perinone, dioxazine, anthraquinone, and isoindolinone; and aniline black. Examples of the inorganic pigments include: inorganic pigments such as titanium oxide, titanium yellow, iron oxide, ultramarine blue, cobalt blue, chromic oxide green, lead yellow, cadmium yellow, and cadmium red; and carbon black.
Examples of the antioxidant include a phenol-based antioxidant, an organic phosphite-based antioxidant, a thioether-based antioxidant, and a metal salt of a higher fatty acid.
Any one of the various known phenol-based antioxidants such as 2,6-di-t-butyl-p-cresol (BHT), 2,2'-methylene-bis-(4-methyl-6-t-butylphenol), and tetrakis-[methylene-3-(3',5'-di-t-butyl-4'-hydroxyphenyl)propi onate] methane is used as the phenol-based antioxidant. In addition, a sulfur-based antioxidant is desirably incorporated together with the above-mentioned phenol-based antioxidant. Any one of the various known sulfur-based antioxidants such as dilauryl thiodipropionate and distearyl thiodipropionate is used as the sulfur-based antioxidant. Further, a phosphorus-based antioxidant is preferably incorporated together with the above-mentioned two kinds of antioxidants in order that a suppressing effect on oxidation degradation may be additionally improved. Any one of the various known phosphorus-based antioxidants such as triphenyl phosphite, trisnonylphenyl phosphite, tris(2,4-di-t-butylphenyl)phosphite, and cyclic neopentane tetraylbis (2, 6-di-t-butyl-4-methylphenyl)phosphite is used as the phosphorus-based antioxidant.

Examples of the crystal nucleating agent include high-melting point polymers, organic carboxylic acids or metal salts thereof, aromatic sulfonic acids or metal salts thereof, organic phosphoric acid compounds or metal salts thereof, dibenzylidene sorbitol or derivatives thereof, a partial metal salt of rosin acid, inorganic fine particles, imidic acid, amic acid, quinacridones, quinones, and mixtures thereof.

In general, a resin composition containing a crystal nucleating agent crystallizes at an increased temperature, and has an increased degree of crystallinity and an increased melting point because the crystal nucleating agent initiates the crystallization with a large number of crystallization-initiating portions. However, the low-crystalline polypropylene is used in the present invention. Accordingly, the addition of the crystal nucleating agent can suppress an increase in melting point while exerting an effect in a process for the production of a crystal nucleus to increase the crystallization temperature. As a result, the polypropylene can be melted at a relatively low temperature. The fact advantageously acts on the cooling step synergistically with the above-mentioned increase in crystallization temperature, thereby leading to an improvement in productivity.

Examples of the above-mentioned high-melting point polymers include polyolefins such as a polyethylene and a polypropylene. A polymer to be used as a high-melting point polymer is a polymer having a melting point of typically 100°C or more, preferably 120°C or more, particularly preferably a polypropylene. Examples of the above-mentioned metal salts include aluminum benzoate, aluminum p-t-butyl benzoate, and sodium adipate. Examples of the above-mentioned metal salts of the organic phosphoric acid compounds include Adekastab NA-11 and Adekastab NA-21 each manufactured by ADEKA Corporation. Examples of the above-mentioned dibenzylidene sorbitol and derivatives thereof include dibenzylidenesorbitol, 1,3:2,4-bis(o-3,4-dimethylbenzylidene)sorbitol, 1,3:2,4-bis(o-2,4-dimethylbenzylidene) sorbitol, 1,3:2,4-bis(o-4-ethylbenzylidene)sorbitol, 1,3:2,4-bis(o-4-chlorobenzylidene)sorbitol, and 1,3:2,4-dibenzylidenesorbitol. Specifically, there are given GELALL MD and GELALL MD-R each manufactured by New Japan Chemical Co., Ltd. and the like. Examples of the partial metal salt of rosin acid include PINE CRYSTAL KM1600, PINE CRYSTAL KM1500, and PINE CRYSTAL KM1300 each manufactured by Arakawa Chemical Industries, Ltd. Examples of the above-mentioned inorganic fine particles include talc, clay, mica, asbestos, glass fiber, glass flake, glass beads, calcium silicate, montmorillonite, bentonite, graphite, aluminum powder, alumina, silica, diatomaceous earth, titanium oxide, magnesium oxide, pumice powder, pumice balloon, aluminum hydroxide, magnesium hydroxide, basic magnesium carbonate, dolomite, calciumsulfate, potassiumtitanate, bariumsulfate, calciumsulfite, and molybdenum sulfide.

One kind of the crystal nucleating agents may be used alone, or two or more kinds thereof may be used in combination. In the present invention, of those crystal nucleating agents, preferred are dibenzylidenesorbitol, 1,3:2,4-bis(o-3,4-dimethylbenzylidene)sorbitol, 1,3:2,4-bis(o-2,4-dimethylbenzylidene)sorbitol, 1,3:2,4-bis(o-4-ethylbenzylidene)sorbitol, 1,3:2,4-bis(o-4-chlorobenzylidene)sorbitol, and 1,3:2,4-dibenzylidenesorbitol.

The content of the crystal nucleating agent is preferably 10 to 10,000 ppm by mass, more preferably 100 to 5,000 ppm by mass with reference to the resin composition.

The content of the low-crystalline polypropylene in the total amount of the crystalline resin composition is preferably 70 mass% or more, more preferably 80 mass% or more. When the content of the low-crystalline polypropylene is 70 mass% or more, sufficient elastic recovery is obtained.

The method of producing an elastic fiber according to the first invention of the present application includes the steps of: subjecting the above-mentioned raw material to melt extrusion with a spinning nozzle at 100 to 300°C; cooling the fiber after the melt extrusion in a water bath at 0 to 50°C; and winding the cooled fiber.

The melting temperature is preferably 105 to 280°C, more preferably 110 to 260°C. There is no need to increase the melting temperature because the low-crystalline polypropylene used in the present invention has a relatively low melting point. The fact advantageously acts on the cooling step, thereby improving the productivity and fiber characteristics.

In the first invention of the present application, the melt-extruded filament is desirably introduced into water within 0.3 second or more and 20 seconds or less, preferably 1 second or more and 10 seconds or less after the melt-extrusion with the spinning nozzle. As the time period for which the filament passes the air before being introduced into water (hereinafter abbreviated as "Ta") becomes shorter, the time period becomes more effective. However, when the Ta falls short of the above-mentioned range, the fiber has a roughened surface and is poor in stretchability. In contrast, when the Ta outstrips the above-mentioned range, the fiber is cooled by its passage through the air, and a problem similar to that of a gas cooling method tends to arise.

The temperature of the water bath is 0°C or more and 50°C or less, preferably 0°C or more and 20°C or less. A water temperature outstripping the above-mentioned range is not preferred because the fiber is poor in surface property, and an apparatus and the step become complicated. A time period of 1 second or more typically suffices for the cooling in the water bath. A cooling time in the range of 1 second to 10 seconds is preferably applied.

The unstretched fiber subjected to the cooling solidification molding is subsequently subjected to one-stage or multistage stretching as required. The fiber is stretched so as to have, for example, a length equal to or more than 200%

of its initial length, and further, is thermally fixed and wound in a taut or loose state depending on requested characteristics.

A fiber using the low-crystalline polypropylene may cause problems such as tack and a reduction in releasability. In the production method according to the first invention of the present application, however, those problems are resolved by, for example, a combination of the above-mentioned melting temperature and cooling, and the use of the crystal nucleating agent, and hence a polypropylene elastic fiber can be stably produced.

Furthermore, the present application discloses the polypropylene-based elastic fiber which is an elastic fiber having a core-sheath bicomponent structure obtained by using a specific polypropylene to be described later (which may be referred to as "core-sheath bicomponent elastic fiber" in the description). It should be noted that a method of producing the polypropylene-based elastic fiber disclosed in the present application is not particularly limited, and a method involving cooling in a water bath in the above-mentioned first invention may be employed, or a conventionally known method may be employed.

The polypropylene used in the above polypropylene-based elastic fiber has the same characteristics as those of the low-crystalline polypropylene described in the first invention, and is a low-crystalline polypropylene satisfying the following characteristics (a) to (g).

(a) [mmnm]=20 to 60 mol%
(b) [mm]=50 to 90 mol%
(c) [rrrr) / (1-[mmmm] ) $\leq$0.1
(d) [rmrm]>2.5 mol%
(e) [mm] $\times$ [rr] / $[mr]^2$$\leq$2.0
(f) weight-average molecular weight (Mw)=10,000 to 200,000
(g) molecular weight distribution (Mw/Mn)<4

It should be noted that detailed description of the characteristics (a) to (g) is as previously described in the first invention. Further, as long as the above-mentioned characteristics (a) to (g) are satisfied, there may be used a copolymer using a comonomer except propylene to such an extent that the object of the present invention is not impaired. In this case, the content of the comonomer is typically 2 mass% or less. Examples of the comonomer include ethylene, 1-butene, 1-pentene, 4-methyl-1-pentene, 1-hexene, 1-octane, 1-decene, 1-dodecene, 1-tetradecene, 1-hexadecene, 1-octadecene, and 1-eicosene. In the present application, one kind or two or more kinds thereof can be used.

The polypropylene-based elastic fiber disclosed in the present application uses the above-mentioned low-crystalline polypropylene or a crystalline resin composition containing the low-crystalline polypropylene at least as a core component. The above-mentioned core component has the same characteristics as those of the raw material described in the first invention, and satisfies the following characteristics (A) and (B)

(A) A crystallization temperature (Tc), which is measured with a differential scanning calorimeter (DSC), is 20 to 100°C.

(B) A melting point (Tm-D), which is defined as the peak top of the peak observed at the highest temperature of a melting endothermic curve obtained with a differential scanning calorimeter (DSC) by retaining the raw material under a nitrogen atmosphere at -10°C for 5 minutes and then increasing the temperature at 10°C/min, is 0 to 120°C.

It should be noted that detailed description of the characteristics (A) and (B) is as previously described in the first invention.

A preferred MFR of the above-mentioned core component, and specific examples of the other thermoplastic resin and the additive in the crystalline resin composition are as previously described for the raw material in the first invention.

The thermoplastic resin is particularly preferably a crystalline polyolefin. It should be noted that the term "crystalline polyolefin" as used herein refers to a polyolefin which is a solid at normal temperature and has a melting point. Specific examples of the crystalline polyolefin include an ethylene-based polymer, a propylene-based polymer, and a butene-based polymer. Those polymers may be homopolymers, or may be copolymers. A copolymerizable monomer is, for example, an $\alpha$-olefin having 3 to 20 carbon atoms such as ethylene, propylene, 1-butene, 1-pentene, 1-hexene, 1-octene, or 1-decene, an acrylate such as methyl acrylate, or vinyl acetate.

Of the above-mentioned crystalline polyolefins, a polypropylene having an MFR of 20 to 80 g/10 minutes or a polyethylene having an MFR of 10 to 70 g/10 minutes is particularly preferred.

The sheath component in the polypropylene-based elastic fiber disclosed in the present application is not particularly limited as long as a requirement concerning a total low-crystalline polypropylene fraction to be described later is satisfied. The sheath component is, for example, the low-crystalline polypropylene satisfying the characteristics (a) to (g) or the crystalline polyolefin. A preferred crystalline polyolefin in the sheath component is, for example, a polypropylene having an MFR of 20 to 80 g/10 minutes or a polyethylene having an MFR of 10 to 70 g/10 minutes.

The polypropylene-based elastic fiber disclosed in the present application has a total low-crystalline polypropylene fraction, which is calculated from the following equation (I), of 80 to 99 mass%. When the fraction falls within the range, a polypropylene-based elastic fiber having excellent elastic recovery is obtained. From the viewpoint, the fraction is preferably 90 to 99 mass%, more preferably 95 to 99 mass%.

[Math. 1]

$$\text{Total low-crystalline polypropylene fraction (mass\%)} = (Ws \times Xs + Wc \times Xc)/100 \quad \text{(I)}$$

In the equation (I), Ws represents the mass fraction of the sheath component, Wc represents the mass fraction of the core component, Xs represents the mass fraction of the low-crystalline polypropylene in the sheath component, and Xc represents the mass fraction of the low-crystalline polypropylene in the core component.

The core-sheath bicomponent elastic fiber disclosed in the present application preferably satisfies the relationship of $Ws \leq Wc$. When the Ws is equal to or smaller than the Wc, sufficient elastic recovery is obtained. The Ws is preferably 5 to 50 mass%, more preferably 10 to 30 mass%. The Wc is preferably 95 to 50 mass%, more preferably 90 to 70 mass%. When the Ws is less than 5 mass% or the We exceeds 95 mass%, tack may occur or the sheath of a molded article may crack. In addition, when the Ws exceeds 50 mass% or the Wc is less than 50 mass%, an elastic recovery ratio is apt to reduce.

In addition, the polypropylene-based elastic fiber disclosed in the present application is preferably such that the core component contains the low-crystalline polypropylene at a larger content than the sheath component does, that is, the relationship of $Ws \times Xs \leq Wc \times Xc$ is satisfied.

The polypropylene elastic fiber obtained by the production method according to the first invention of the present application and the polypropylene-based elastic fiber disclosed in the present application can find use in applications including: sanitary materials such as paper diapers; fishery material applications such as ropes and fishing nets; land net applications such as insect screens, windbreak screens, light-shielding nets, and various nets for sports; industrial towel applications such as sheets for architecture and civil engineering, filters, and flexible containers; and brush applications such as paint brushes and toothbrushes.

Examples

Next, the present invention is described in more detail with reference to examples, but the present invention is by no means limited thereto.

Production Example 1 [production of low-crystalline polypropylene]

First, 20 L/h of n-heptane, 15 mmol/h of triisobutylaluminum, and further, 6 μmol/h in terms of zirconium of a catalyst component obtained by bringing dimethylanilinium tetrakispentafluorophenylborate, (1,2'-dimethylsilylene) (2,1'-dimethylsilylene)-bis(3-trimethyl silylmethylindenyl) zirconiumdichloride, triisobutylaluminum, and propylene into contact with one another at a mass ratio of 1:2:20 in advance were continuously supplied to a stainless reactor with a stirring machine having an internal volume of 20 L.

Then, a polymerization reaction was performed as described below. A polymerization temperature was set to 67°C, and propylene and hydrogen were continuously supplied so that a hydrogen concentration in the vapor phase portion of the reactor and the total pressure in the reactor were kept at 0.8 mol% and 0.75 MPa·G, respectively.

An IRGANOX 1010 (manufactured by Ciba Specialty Chemicals) as an antioxidant was added to the resultant polymerization solution so that its content was 500 ppm by mass. Next, n-heptane as the solvent was removed. Thus, a low-crystalline polypropylene was obtained.

The melting point (Tm-D), stereoregularity index ( [mm] ), meso pentad fraction [mmmm], racemic-meso-racemic-meso fraction [rmrm], [rrrr] / (1-[mmmm] ), $[mm] \times [rr] / [mr]^2$, weight-average molecular weight (Mw), and molecular weight distribution (Mw/Mn) of the resultant low-crystalline polypropylene were measured by the above-mentioned methods. Table 1 shows the results.

[Table 1]

Table 1

| | Production Example 1 |
|---|---|
| Melting point (Tm-D) (°C) | 70 |

(continued)

| | Production Example 1 |
|---|---|
| Crystallization temperature (Tc) (°C) | 36 |
| [mm] (mol%) | 65 |
| [mmmm] (mol%) | 44.6 |
| [rmrm] (mol%) | 2.7 |
| [rrrr] / (1-[mmmm]) | 0.036 |
| [mm] $\times$ [rr] / $[mr]^2$ | 1.4 |
| Mw | 110, 000 |
| Mw/Mn | 2.0 |

Example 1

The low-crystalline polypropylene obtained in Production Example 1 as a raw material was subjected to melt extrusion with a uniaxial extruder having a diameter of 20 mm (VS20 manufactured by TANABE PLASTICS MACHINERY CO., LTD.) at a resin temperature of 170°C. The molten resin was discharged from a nozzle having a nozzle diameter of 3 mm at 50 g/min per hole and cooled in a cooling water bath at 20°C. After that, the cooled fibers were wound around a winding roll at a winding speed of 0.33 m/min. As described later, a state upon release of the wound fibers from the roll was observed and an evaluation for roll releasability was performed.
Further, the fibers obtained by the above-mentioned method with their initial lengths set to 100 mm each were stretched with a tensile tester (Autograph AGF100 manufactured by Shimadzu Corporation) at 300 mm/min by 400%. Thus, elastic fibers were obtained.

Example 2

Elastic fibers were molded in the same manner as in Example 1 except that the winding speed and the cooling temperature in Example 1 were changed to 0.17 m/min and 15°C, respectively.

Example 3

Elastic fibers were molded in the same manner as in Example 1 except that the discharge amount, the winding speed, and the cooling temperature in Example 1 were changed to 0.73 g/min, 0.17 m/min, and 15°C, respectively.

Example 4

Elastic fibers were molded in the same manner as in Example 1 except that the stretching was not performed in Example 1.

Example 5

Elastic fibers were molded in the same manner as in Example 1 except that the stretching ratio in Example 1 was changed to 200%.

Example 6

Elastic fibers were molded in the same manner as in Example 1 except that the stretching ratio in Example 1 was changed to 700%.

Example 7

Elastic fibers were molded in the same manner as in Example 1 except that 5, 000 ppm by mass of a crystal nucleating agent (GEL ALL MD manufactured by New Japan Chemical Co., Ltd.) were added to the low-crystalline polypropylene in Example 1.

Comparative Example 1

Elastic fibers were molded in the same manner as in Example 1 except that the cooling in the water bath was not performed in Example 1.

Comparative Example 2

Elastic fibers were molded in the same manner as in Example 1 except that the water temperature in the water bath in Example 1 was changed to 80°C.

Measurements and evaluations

The elastic fibers obtained by the above-mentioned methods were evaluated as described below. Table 1 shows the results.

[Roll releasability]

The evaluation for roll releasability was performed as described below. Upon release of fibers wound around a winding roll from the roll, the case where the fibers were released without any problem was evaluated as o, the case where some of the fibers adhered to each other but the fibers were able to be released one by one was evaluated as Δ, and the case where the fibers adhered to each other and were not able to be released was evaluated as x.

[Elastic recovery ratio]

A fiber with its initial length $L_o$ set to 50 mm was stretched with a tensile tester (Autograph AGF100 manufactured by Shimadzu Corporation) at a tension speed of 150 mm/min by 100%. Immediately after that, the fiber was returned to its initial position at 150 mm/min, and was then stretched at a tension speed of 150 mm/min by 100% again. A stroke length L (mm) at which a tension rose from 0 in the second stretching process was measured. An elastic recovery ratio (%) was calculated from the following equation.

$$\text{Elastic recovery ratio (\%)} = (1 - L/L_0) \times 100$$

[Table 2]

Table 2

| | | Example | | | | | | | Comparative Example | |
|---|---|---|---|---|---|---|---|---|---|---|
| | | 1 | 2 | 3 | 4 | 5 | 6 | 7 | 1 | 2 |
| Molding conditions | Discharge amount (g/min.) | 5.0 | 5.0 | 7.3 | 5.0 | 5.0 | 5.0 | 5.0 | 5.0 | 5.0 |
| | Cooling water temperature (°C) | 20 | 15 | 15 | 20 | 20 | 20 | 20 | - | 80 |
| | Winding speed (m/min.) | 0.33 | 0.17 | 0.17 | 0.33 | 0.33 | 0.33 | 0.33 | 0.33 | 0.33 |
| | Stretching ratio (%) | 400 | 400 | 400 | - | 200 | 700 | 400 | - | - |

(continued)

| | | Example | | | | | | | Comparative Example | |
|---|---|---|---|---|---|---|---|---|---|---|
| | | 1 | 2 | 3 | 4 | 5 | 6 | 7 | 1 | 2 |
| Results of evaluations | Roll releasability | o | o | o | o | o | o | o | x | x |
| | Elastic recovery ratio (%) | 87 | 90 | 89 | 80 | 85 | 90 | 86 | - | - |
| | Fiber diameter after Stretching (mm) | 0.54 | 0.41 | 0.51 | 0.55 | 0.54 | 0.54 | 0.53 | 0.55 | 0.56 |

Example 8

A polypropylene-based elastic fiber was produced as described below by using a product obtained by mixing the low-crystalline polypropylene (low-crystalline PP) obtained in Production Example 1 and a high-crystalline polypropylene (high-crystalline PP) having a melt flow rate (MFR), which is measured in conformity with JIS-K7210 under conditions of a temperature of 230°C and a load of 21.18 N, of 60 g/10 minutes (Y6005GM manufactured by Prime Polymer Co., Ltd.) at a blending ratio "former: latter" of 92 mass%:8 mass% in a pellet state as a sheath component and the low-crystalline PP obtained in Production Example 1 alone as a core component.
The sheath component resin and the core component resin were subjected to melt extrusion with different uniaxial extruders at resin temperatures of 220°C each. The molten resins were discharged from a core-sheath bicomponent nozzle having a nozzle diameter of 0.3 mm (the number of holes: 35) at a speed of 1.0 g/min per hole so that a mass ratio "sheath component: core component" was 50:50.
The discharged fiber was cooled with cooling air at 5°C and wound around a winding roll at a winding speed of 2, 000 m/min. The resultant polypropylene-based elastic fiber was evaluated for its elastic recovery ratio by the above-mentioned method. Table 3 shows the result.

Example 9

A polypropylene-based elastic fiber was molded in the same manner as in Example 8 except that the mass fractions of the core component and the sheath component were changed to 60 mass% and 40 mass%, respectively, and the low-crystalline PP fraction in the sheath component was changed to 90 mass%. Then, the fiber was evaluated for its elastic recovery ratio in the same manner as in Example 8. Table 3 shows the result.

Example 10

A polypropylene-based elastic fiber was molded in the same manner as in Example 8 except that the mass fractions of the core component and the sheath component were changed to 70 mass% and 30 mass%, respectively, and the low-crystalline PP fraction in the sheath component was changed to 87 mass%. Then, the fiber was evaluated for its elastic recovery ratio in the same manner as in Example 8. Table 3 shows the result.

Example 11

A polypropylene-based elastic fiber was molded in the same manner as in Example 8 except that the mass fractions of the core component and the sheath component were changed to 80 mass% and 20 mass%, respectively, and the low-crystalline PP fraction in the sheath component was changed to 80 mass%. Then, the fiber was evaluated for its elastic recovery ratio in the same manner as in Example 8. Table 3 shows the result.

Example 12

A polypropylene-based elastic fiber was molded in the same manner as in Example 8 except that the mass fractions of the core component and the sheath component were changed to 90 mass% and 10 mass%, respectively,

and the low-crystalline PP fraction in the sheath component was changed to 60 mass%. Then, the fiber was evaluated for its elastic recovery ratio in the same manner as in Example 8. Table 3 shows the result.

Example 13

A polypropylene-based elastic fiber was molded in the same manner as in Example 8 except that the mass fractions of the core component and the sheath component were changed to 90 mass% and 10 mass%, respectively, and the low-crystalline PP fraction in the sheath component was changed to 50 mass%. Then, the fiber was evaluated for its elastic recovery ratio in the same manner as in Example 8. Table 3 shows the result.

Example 14

A polypropylene-based elastic fiber was molded in the same manner as in Example 8 except that the mass fractions of the core component and the sheath component were changed to 80 mass% and 20 mass%, respectively, and the low-crystalline PP fraction in the sheath component was changed to 50 mass%. Then, the fiber was evaluated for its elastic recovery ratio in the same manner as in Example 8. Table 3 shows the result.

Example 15

A polypropylene-based elastic fiber was molded in the same manner as in Example 8 except that the mass fractions of the core component and the sheath component were changed to 90 mass% and 10 mass%, respectively, and the sheath component was formed of 100 mass% of a high-crystalline PP. Then, the fiber was evaluated for its elastic recovery ratio in the same manner as in Example 8. Table 3 shows the result.

Example 16

A polypropylene-based elastic fiber was molded in the same manner as in Example 8 except that the mass fractions of the core component and the sheath component were changed to 90 mass% and 10 mass%, respectively, and the sheath component was formed of 100 mass% of a high-density polyethylene (HDPE) (HIZEX120YKmanufactured by Prime Polymer Co., Ltd.) . Then, the fiber was evaluated for its elastic recovery ratio in the same manner as in Example 8. Table 3 shows the result.

Example 17

A polypropylene-based elastic fiber was molded in the same manner as in Example 8 except that the mass fractions of the core component and the sheath component were changed to 70 mass% and 30 mass%, respectively, and the low-crystalline PP fraction in the sheath component was changed to 50 mass%. Then, the fiber was evaluated for its elastic recovery ratio in the same manner as in Example 8. Table 3 shows the result.

Example 18

A polypropylene-based elastic fiber was molded in the same manner as in Example 8 except that the mass fractions of the core component and the sheath component were changed to 80 mass% and 20 mass%, respectively, and the sheath component was formed of 100 mass% of a HDPE. Then, the fiber was evaluated for its elastic recovery ratio in the same manner as in Example 8. Table 3 shows the result.
[Table 3]

Table 3

| | Example | | | | | | | | | | |
|---|---|---|---|---|---|---|---|---|---|---|---|
| | 8 | 9 | 10 | 11 | 12 | 13 | 14 | 15 | 16 | 17 | 18 |
| Mass fraction of core component (mass%) | 50 | 60 | 70 | 80 | 90 | 90 | 80 | 90 | 90 | 70 | 80 |
| Mass fraction of sheath component (mass%) | 50 | 40 | 30 | 20 | 10 | 10 | 20 | 10 | 10 | 30 | 20 |

(continued)

| | | Example | | | | | | | | | | |
|---|---|---|---|---|---|---|---|---|---|---|---|---|
| | | 8 | 9 | 10 | 11 | 12 | 13 | 14 | 15 | 16 | 17 | 18 |
| Composition of core component (mass%) | Low-crystalline PP | 100 | 100 | 100 | 100 | 100 | 100 | 100 | 100 | 100 | 100 | 100 |
| Composition of sheath component (mass%) | Low-crystalline PP | 92 | 90 | 87 | 80 | 60 | 50 | 50 | - | - | 50 | - |
| | High-crystalline PP | 8 | 10 | 13 | 20 | 40 | 50 | 50 | 100 | - | 50 | - |
| | HDPE | - | - | - | - | - | - | - | - | 100 | - | 100 |
| Total low-crystalline PP fraction (mass%) | | 96 | 96 | 96 | 96 | 96 | 95 | 90 | 90 | 90 | 85 | 80 |
| Elastic recovery ratio (%) | | 90 | 88 | 86 | 85 | 86 | 89 | 80 | 72 | 74 | 67 | 60 |

Industrial Applicability

According to the first invention of the present application, the polypropylene elastic fiber which is excellent in elastic recovery, has high strength, is free of tack, and shows good texture can be stably produced. In addition, the present application discloses the polypropylene-based elastic fiber which has excellent elastic recovery is obtained.

## Claims

1. A method of producing an elastic fiber, comprising the steps of:

   subjecting a raw material to melt extrusion with a spinning nozzle at 100 to 300°C;
   cooling the fiber after the melt extrusion in a water bath at 0 to 50°C; and
   winding the cooled fiber,
   wherein a low-crystalline polypropylene satisfying the following characteristics (a) to (g) or a crystalline resin composition containing the low-crystalline polypropylene, the low-crystalline polypropylene or the crystalline resin composition satisfying the following characteristics (A) and (B), is used as the raw material:

   (a) [mmmm]=20 to 60 mol%;
   (b) [mm] =50 to 90 mol%;
   (c) [rrrr] / (1-[mmmm])≤0.1;
   (d) [rmrm]>2.5 mol%;
   (e) [mm] × [rr] / $[mr]^2$≤2.0;
   (f) weight-average molecular weight (Mw)=10,000 to 200,000;
   (g) molecular weight distribution (Mw/Mn)<4;
   (A) a crystallization temperature (Tc), which is measured with a differential scanning calorimeter (DSC), is 20 to 100°C; and
   (B) a melting point (Tm-D), which is defined as a peak top of a peak observed at a highest temperature of a melting endothermic curve obtained with a differential scanning calorimeter (DSC) by retaining the raw material under a nitrogen atmosphere at -10°C for 5 minutes and then increasing the temperature at 10°C/min, is 0 to 120°C.

2. The method of producing an elastic fiber according to claim 1, wherein the crystalline resin composition contains a crystal nucleating agent.

3. The method of producing an elastic fiber according to claim 1 or 2, further comprising, after the step of winding the

cooled fiber, the step of stretching the fiber so that the fiber has a length equal to or more than 200% of an initial length of the fiber.

## Patentansprüche

1. Ein Verfahren zur Herstellung einer elastischen Faser, umfassend die Schritte:

   Unterziehen eines Rohmaterials einer Schmelzextrusion mit einer Spinndüse bei 100 bis 300°C;
   Kühlen der Faser nach der Schmelzextrusion in einem Wasserbad bei 0 bis 50°C; und
   Wickeln der gekühlten Faser,
   wobei ein niederkristallines Polypropylen, das die nachstehenden Eigenschaften (a) bis (g) erfüllt, oder eine kristalline Harzzusammensetzung, welche das niederkristalline Polypropylen enthält, als Rohmaterial verwendet werden, wobei das niederkristalline Polypropylen oder die kristalline Harzzusammensetzung die nachstehenden Eigenschaften (A) und (B) erfüllen:

   (a) [mmmm] = 20 bis 60 mol%;
   (b) [mm] = 50 bis 90 mol%;
   (c) [rrrr]/ 1-[mmmm]) ≤ 0,1;
   (d) [rmrm] > 2,5 mol%;
   (e) [mm] x [rr] / $[mr]^2$ ≤ 2,0;
   (f) Gewichtsmittel des Molekulargewichts (Mw) = 10.000 bis 200.000;
   (g) Molekulargewichtsverteilung (Mw/Mn) < 4;
   (A) eine Kristallisationstemperatur (Tc), welche mit einem Dynamischen Differenzkalorimeter (DSC) gemessen wird, 20 bis 100°C beträgt; und
   (B) ein Schmelzpunkt (Tm-D), welcher als Peakspitze eines Peaks definiert ist, der bei einer höchsten Temperatur einer endothermen Schmelzkurve beobachtet wird, welche mittels eines Dynamischen Differenzkalorimeters (DSC) durch Halten des Rohmaterials unter einer Stickstoffatmosphäre bei -10°C für 5 Minuten und dann Erhöhen der Temperatur um 10°C/min erhalten wird, 0 bis 120°C beträgt.

2. Das Verfahren zur Herstellung einer elastischen Faser gemäß Anspruch 1, wobei die kristalline Harzzusammensetzung einen Kristallkeimbildner aufweist.

3. Das Verfahren zur Herstellung einer elastischen Faser gemäß Anspruch 1 oder 2, ferner umfassend, nach dem Schritt des Wickelns der gekühlten Faser, den Schritt des Dehnens der Faser, so dass die Faser eine Länge gleich oder mehr als 200 % einer anfänglichen Länge der Faser aufweist.

## Revendications

1. Procédé de production d'une fibre élastique, comprenant les étapes de :

   exposition d'une matière première à une extrusion à l'état fondu avec une buse de filage à 100 à 300°C ;
   refroidissement de la fibre après l'extrusion à l'état fondu dans un bain d'eau à 0 à 50°C ; et
   bobinage de la fibre refroidie,
   où un polypropylène faiblement cristallin satisfaisant les caractéristiques (a) à (g) suivantes ou une composition de résine cristalline contenant le polypropylène faiblement cristallin, le polypropylène faiblement cristallin ou la composition de résine cristalline satisfaisant les caractéristiques (A) et (B) suivantes, est utilisé comme matière première :

   (a) [mmmm] = 20 à 60 mol % ;
   (b) [mm] = 50 à 90 mol % ;
   (c) [rrrr]/(1- [mmmm]) ≤0,1;
   (d) [rmrm] > 2,5 mol % ;
   (e) [mm] x [rr]/$[mr]^2$≤ 2,0 ;
   (f) masse moléculaire moyenne en poids (Mp) = 10000 à 200000 ;
   (g) distribution de masse moléculaire (Mp/Mn) < 4 ;
   (A) une température de cristallisation (Tc), qui est mesurée avec un calorimètre à balayage différentiel

(DSC), est 20 à 100°C ; et
(B) un point de fusion (Tm-D), qui est défini comme un sommet de pic d'un pic observé à une température la plus élevée d'une courbe endothermique de fusion obtenue avec un calorimètre à balayage différentiel (DSC) en maintenant la matière première sous une atmosphère d'azote à -10°C pendant 5 min puis en augmentant la température à 10°C/min, est 0 à 120°C.

**2.** Procédé de production d'une fibre élastique selon la revendication 1, où la composition de résine cristalline contient un agent de nucléation des cristaux.

**3.** Procédé de production d'une fibre élastique selon la revendication 1 ou 2, comprenant en outre, après l'étape de bobinage de la fibre refroidie, l'étape d'étirage de la fibre de sorte que la fibre a une longueur égale ou supérieure à 200 % d'une longueur initiale de la fibre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2161360 A
- JP 2002088568 A
- JP 2006176600 A


### Non-patent literature cited in the description


- **A. ZAMBELLI et al.** *Macromolecules,* 1973, vol. 6, 925
- *Macromolecules,* 1975, vol. 8, 687